(19) Europäisches Patentamt
European Patent Office
Office européen des brevets

(11) **EP 3 336 519 A1**

(12) **EUROPÄISCHE PATENTANMELDUNG**

(43) Veröffentlichungstag:
**20.06.2018 Patentblatt 2018/25**

(51) Int Cl.:
***G01N 15/14*** *(2006.01)* *G01N 15/10* *(2006.01)*

(21) Anmeldenummer: **17210880.5**

(22) Anmeldetag: **10.02.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA MD**

(30) Priorität: **12.02.2015 DE 102015202574**

(62) Dokumentnummer(n) der früheren Anmeldung(en) nach Art. 76 EPÜ:
**16704825.5 / 3 256 839**

(71) Anmelder: **CYTENA GMBH**
**79110 Freiburg (DE)**

(72) Erfinder:
• **Schöndube, Jonas**
  **79110 Freiburg (DE)**
• **Leibacher, Ivo**
  **8044 Zürich (CH)**

(74) Vertreter: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

Bemerkungen:
Diese Anmeldung ist am 28-12-2017 als Teilanmeldung zu der unter INID-Code 62 erwähnten Anmeldung eingereicht worden.

(54) **VORRICHTUNG UND VERFAHREN ZUM DISPENSIEREN VON UNTER VERWENDUNG EINES AKUSTISCHEN FELDS AUSGERICHTETEN PARTIKELN IN FREI FLIEGENDEN TROPFEN**

(57)    Eine Vorrichtung zum Dispensieren von Partikeln (10) in frei fliegenden Flüssigkeitstropfen besitzt eine Fluidkammer (14), die mit einer Düse(16) fluidisch gekoppelt ist, einen Schallgeber (18), der konfiguriert ist, um in der Fluidkammer ein akustisches Feld zu erzeugen, durch das Partikel in einer Flüssigkeit in der Fluidkammer in einer Anordnung ausgerichtet werden können, und einen Drop-on-Demand-Mechanismus (20), der konfiguriert ist, um gezielt einen einzelnen Flüssigkeitstropfen (12), der einen oder mehrere Partikel enthält, zu einem gewählten Zeitpunkt aus der Düse zu dispensieren. In einem ersten Modus wird ein akustisches Feld erzeugt wird, bei dem zumindest ein Partikel mit jedem Tropfenausstoß schrittweise Richtung Düse bewegt wird, und in einem zweiten Modus wird ein akustisches Feld erzeugt, bei dem zumindest ein Partikel in der Fluidkammer festgehalten wird.

Fig. 1

**Beschreibung**

Die vorliegende Erfindung bezieht sich auf Vorrichtungen und Verfahren zum Dispensieren von Partikeln in frei fliegenden Flüssigkeitstropfen und insbesondere auf Vorrichtungen und Verfahren zum Dispensieren von Partikeln in frei fliegenden Flüssigkeitstropfen unter Verwendung eines Drop-on-Demand-Mechanismus.

Zellen und andere Mikropartikel können entweder durch Freistrahldruckmethoden oder innerhalb einer geschlossenen Fluidik gehandhabt oder analysiert werden. Die Bezeichnung "Partikel" ist dabei hierin als Oberbegriff zu verstehen, der sowohl feste organische oder anorganische Mikropartikel als auch biologische Zellen umfasst.

Bei Freistrahldruckmethoden kann zwischen Dispensiersystemen mit Sensorik, die Sensoren zum Erkennen der Partikel/Zellen aufweisen, und solchen, die ohne Sensor arbeiten, unterschieden werden. Systeme, die ohne Sensor arbeiten, erlauben weder eine Kontrolle über die Menge an abgegebenen Partikeln, noch eine Analyse dieser Partikel. Bei Dispensersystemen bzw. Partikeldispensern mit Sensorik kann zwischen sogenannten Drop-on-Demand-Dispensern und Continuous-Jet-Dispensern unterschieden werden. Drop-on-Demand-Dispenser erlauben typischerweise einen höheren Grad an Kontrolle, während Continuous-Jet-Dispenser typischerweise einen höheren Durchsatz aufweisen.

Unter einem Dispenser bzw. Tropfengenerator wird hierin allgemein eine Apparatur zum Abgeben von Flüssigkeitsmengen in Form von frei fliegenden Tropfen verstanden. Unter einer Drop-on-Demand-Technologie bzw. einem Drop-on-Demand-Mechanismus wird hierin allgemein eine Technologie bzw. ein Mechanismus verstanden, bei dem gezielt einzelne Tropfen aus einer Düse zu einem gewählten Zeitpunkt erzeugt werden. Mit anderen Worten wird jeder einzelne Tropfen On-Demand (auf Befehl) unter Verwendung eines separaten Ansteuersignals erzeugt. Im Gegensatz zur Drop-on-Demand-Drucktechnologie wird bei der Continuous-Jet-Drucktechnologie druckgetrieben ein dünner Flüssigkeitsstrahl aus einer Düse abgegeben, wobei der Flüssigkeitsstrahl nach Austritt aus der Düse in einzelne Tropfen zerfällt, die beispielsweise elektrostatisch abgelenkt werden können. Bei der Continuous-Jet-Drucktechnologie ist somit nicht für jeden einzelnen Tropfen ein separates Ansteuersignal vorgesehen und die einzelnen Tropfen können nicht gezielt zu einem gewählten Zeitpunkt erzeugt werden.

Unter dem Begriff Schallstrahlungskraft wird die über die Zeit gemittelte Kraft verstanden, die ein Objekt bei Auftreffen eines Schallfeldes erfährt. Unter Akustophoretik bzw. Akustophorese wird eine durch Schallwellen erzeugte Bewegung von Partikeln in Suspensionen bzw. deren gezielte Handhabung bzw. Manipulation zum Zweck einer definierten Bewegung oder Anordnung, die durch ein definiertes Auftreten von Schallwellen erzeugt wird, verstanden. Ferner wird unter einem Observationsvolumen hierin ein definiertes, zweidimensionales Raster oder ein Volumenbereich verstanden, in dem Messungen oder Beobachtungen vorgenommen werden. Unter einer Handhabung von Partikeln wird hierin beispielsweise das Ablenken oder Anordnen von Partikeln innerhalb von Kammern oder Kanälen, beispielsweise Mikrokammern oder Mikrokanälen, verstanden, wobei hierfür unterschiedliche Arten bekannt sind. Technische Methoden für eine Handhabung sind beispielsweise die Akustophoretik, die Elektrophoretik und die Hydrodynamik.

In der Technik sind biokompatible Druckköpfe bekannt, die es ermöglichen, lebende Zellen zu drucken, sie beispielsweise Nakamura et al., "Biocompatible inkjet printing technique for designed seeding of individual living cells", Tissue Engineering (2005), 11(11-12), Seiten 1658 - 1666. In Abhängigkeit von der Konzentration lassen sich auch individuelle Zellen drucken. Jedoch gibt es keine Sensorik zur Detektion der Partikel/Zellen. Bei Yusof et al., "Inkjet-like printing of single-cell", Lab on a Chip (2011), 11(14), Seiten 2447 - 2454 ist ein Druckkopf mit optischer Zellerkennung beschrieben, jedoch sind hier die Zellen willkürlich in der Dosierkammer angeordnet. Auch bei einer vergleichbaren Anordnung, die bei Yamaguchi et al., "Cell patterning through inkjet printing one cell per droplet", Biofabrication (2012), 4(4) sind die Partikel gleichmäßig in der Düse verteilt.

Ferner hat bereits August Kund im 19. Jahrhundert beschrieben, dass durch Schallwellen eine regelmäßige Anordnung von Partikeln in einem Fluid bewirkt werden kann, siehe "Annalen der Physik und Chemie, Band CXXVII, Nr. 4, 1866. Bei Mandralis et al., "Fractionation of suspension using synchronized ultrasonic and flow fields", AlChE Journal (1993), 39(2), Seiten 197 - 206, ist die Anwendung dieses Effekts auf Mikropartikel in kleinen Kanälen beschrieben. Ferner beschreiben T. Laurell et al., "Chip integrated strategies for acoustic separation and manipulation of cells and particles", Chemical Society Reviews (2007), 36(3), Seiten 492-506, die Handhabung bzw. Manipulation von Zellen in mikrofluidischen Strukturen mittels Akustophoretik und zeigen verschiedene mögliche Anordnungen unter kontinuierlichen Flussbedingungen auf.

Bei I. Leibacher et al., "Impedance matched channel walls in acoustofluidic systems", Lab on a chip (2014), 14(3), Seiten 463-470, sind Grundlagen beschrieben, wie in einem mikrofluidischem System Partikel unter Verwendung stehender Schallwellen manipuliert werden können.

Unter einer Durchflusszytometrie, beispielsweise FACS (= Fluorescence-Activated Cell Sorting), wird ein Messverfahren verstanden, das die Analyse von Zellen erlaubt, die in hohem Tempo einzeln an einer elektrischen Spannung oder einem Lichtstrahl vorbeifließen. Ein Verfahren zur Durchflusszytometrie ist beispielsweise aus der US 3,380,584 bekannt. Typischerweise wird bei der Durchflusszytometrie ein Continuous-Jet-Druckverfahren angewandt. Dieses hat den Nachteil, dass kontinuierlich Tropfen erzeugt werden, ohne den Tropfenstrom kontrolliert unterbrechen zu können. Bei einer gezielten Sortierung von Partikeln einschließlich Zellen mittels dieser Technik ist es folglich notwendig, die Tropfen je nach Inhalt an verschiedenen Positionen abzulegen. Dies geschieht durch elektrostatische Ablenkung im Flug. Je höher dabei die Anzahl der Positionen und die geforderte Ablagegenauigkeit (beispielsweise in 96- oder 384-Well-Mikrotiterplatten) ist, desto schwieriger und technisch aufwändiger ist der Prozess.

In der EP 0421 406 A2 ist ein thermischer Inkjet-Druckkopf zum Dispensieren von Partikeln beschrieben. Die Partikel sind willkürlich in einem Reservoir angeordnet und werden erst nach dem Ausstoßen im Flug mittels eines Detektors analysiert.

Die WO 2013/003498 A2 beschreibt ein Verfahren zur Durchflusszytometrie, bei der akustisch fokussierte Partikel einschließlich Zellen durch einen Messbereich fließen, wobei ein optisches Auslesen eines qualitativen oder quantitativen Parameters dieser Partikel erfolgt, um sie zu charakterisieren.

Aus der US 2012/0298564 A1 ist ein Verfahren zum akustischen Handhaben von einem oder mehreren Partikeln beschrieben, um die Partikel für bessere Sensorergebnisse im Kanal genauer zu positionieren.

Aus der WO 2011/154042 A1 sind Vorrichtungen und Verfahren zum Dispensieren von Partikeln/Zellen, die in einem frei fliegenden Tröpfchen enthalten sind, beschrieben. Ein Dispenser mit einem Drop-on-Demand-Generator ist vorgesehen, durch den Tropfen, die Partikel enthalten, aus einer Öffnung ausgestoßen werden können. Gemäß dieser Schrift werden die Partikel hydrodynamisch oder dielektrisch in dem Drop-on-Demand-Dispenser fokussiert.

Die Aufgabe der vorliegenden Erfindung besteht darin, Vorrichtungen und Verfahren zu schaffen, die es ermöglichen, zuverlässig Partikel in frei fliegenden Flüssigkeitstropfen zu dispensieren.

Diese Aufgabe wird durch eine Vorrichtung gemäß Anspruch 1 und ein Verfahren gemäß Anspruch 11 gelöst.

Ausführungsbeispiele der Erfindung schaffen eine Vorrichtung zum Dispensieren von Partikeln in frei fliegenden Flüssigkeitstropfen, mit folgenden Merkmalen:

einer Fluidkammer, die mit einer Düse fluidisch gekoppelt ist;

einem Schallgeber, der konfiguriert ist, um in der Fluidkammer ein akustisches Feld zu erzeugen, durch das Partikel in einer Flüssigkeit in der Fluidkammer in einer Anordnung ausgerichtet werden können; und

einem Drop-on-Demand-Mechanismus, der konfiguriert ist, um gezielt einen einzelnen Flüssigkeitstropfen, der einen oder mehrere Partikel enthält, zu einem gewählten Zeitpunkt aus der Düse zu dispensieren.

Ausführungsbeispiele der Erfindung schaffen ein Verfahren zum Dispensieren von Partikeln in einem frei fliegenden Flüssigkeitstropfen, mit folgenden Merkmalen:

Erzeugen eines akustischen Felds in einer Fluidkammer, die mit einer Düse fluidisch gekoppelt ist, um Partikel in einer Flüssigkeit in der Fluidkammer in einer Anordnung auszurichten; und

Betätigen eines Drop-on-Demand-Mechanismus, der konfiguriert ist, um gezielt einen einzelnen Tropfen zu einem gewählten Zeitpunkt aus der Düse zu dispensieren, um einen frei fliegenden Flüssigkeitstropfen, der einen oder mehrere Partikel enthält, aus der Düse auszustoßen.

Ausführungsbeispiele der Erfindung werden nachfolgend teilweise Bezug nehmend auf die beiliegenden Zeichnungen näher erläutert. Es zeigen:

Fig. 1　　schematisch ein Ausführungsbeispiel einer Vorrichtung zum Dispensieren von Partikeln in frei fliegenden Flüssigkeitstropfen;

Fig. 2a-2c　schematische Darstellungen zur Erläuterung unterschiedlicher Partikelausrichtungen in einer Fluidkammer;

Fig. 3　　schematisch ein Ausführungsbeispiel einer Vorrichtung zum Dispensieren von Partikeln in frei fliegenden Flüssigkeitstropfen mit Sensorik.

Ausführungsbeispiele der Erfindung basieren auf einem Dispensieren von Partikelmitführenden Flüssigkeiten, wobei unter Partikeln in der Flüssigkeit nicht lösbare Objekte zu verstehen sind, die nicht nur Festkörperpartikel umfassen, sondern insbesondere auch lebende Zellen, Gelpartikel, Öltropfen oder mit Flüssigkeit gefüllte Partikel. Die Flüssigkeit kann beispielsweise eine Puffersuspension sein, die lebende Zellen enthält. Partikel werden in frei fliegenden Flüssigkeitstropfen unter Verwendung eines Drop-on-Demand-Mechanismus dispensiert, wobei die Partikel unter Verwendung eines akustischen Felds ausgerichtet bzw. fokussiert werden. Ausführungsbeispiele der Erfindung basieren insbesondere auf der Erkenntnis, dass es unter Verwendung akustophoretischer Verfahren möglich ist, die Partikel innerhalb der Flüssigkeit zu ordnen und geordnet der Düse des Dispensierers zuzuführen. Somit ermöglichen Ausführungsbeispiele der Erfindung die Verwendung von Technologien der einer Mikroaktorik, die die Erzeugung von Schallwellen ermöglicht, um ein entsprechendes akustisches Feld in der Fluidkammer zu bewirken. Bei Ausführungsbeispielen können die Partikel in die Mitte der Fluidkammer, die die Form eines Kanals aufweisen kann, gebracht werden, wo die Geschwindigkeitsverteilung einheitlicher und somit das Fortschreiten der Partikel vorhersagbarer ist. Zudem können die ausgerichteten Partikel besser erfasst werden, da sie von Störeinflüssen, beispielsweise einer Abschaltung, in den Randbereichen der flüssigkeitsführenden Strukturen, also der Fluidkammer, separiert sind.

Bei Ausführungsbeispielen kann die Vorrichtung mit einem Sensor ausgerüstet sein, um bestimmte Partikel oder eine bestimmte Anzahl an Partikeln gezielt zu dispensieren. Der Schallgeber kann konfiguriert sein, um ein akustisches Feld zu erzeugen, durch das einer der Partikel in einem interessierenden Volumen angeordnet wird. Der Sensor muss dabei lediglich eine kleinere interessierende Region (engl. ROI = Region of Interest, interessierendes Volumen), d.h. einen kleineren Kanalausschnitt, überwachen und kann somit schneller und effizienter arbeiten. Bei Ausführungsbeispielen kann der Schallgeber, d.h. der akustische Aktor, von außen an die flüssigkeitsführende Struktur, d.h. die Fluidkammer, des Dispensierers angekoppelt werden und muss nicht in diese integriert werden. Dies hat den Vorteil, dass die Dispensiervorrichtung selbst nicht verändert werden muss. Somit können Herstellungskosten und Komplexität des Dispensierers unverändert bleiben.

Somit wird eine Fokussierung der zu dispensierenden Partikel mittels Hydrodynamik (wie sie z.B. in der WO 2011/154042 A1 beschrieben ist, nicht benötigt. Eine solche Fokussierung mittels Hydrodynamik weist bei einem schrittweisen Dispensieren unter Verwendung eines Drop-on-Demand-Mechanismus einige Nachteile auf, die durch die Verwendung einer akustophoretischen Fokussierung vermieden werden können. Es sind nicht mehrere Flüssigkeitsreservoire bzw. Einlässe erforderlich, so dass die bei der Befüllung entsprechender fluidischer Strukturen entstehenden Probleme insbesondere hinsichtlich einer Gasblasenbildung vermieden werden können. Ferner ermöglicht die Akustophorese eine genauere Fokussierung, die weniger abhängig von Fertigungstoleranzen und somit robuster ist. Ferner wurde erkannt, dass eine dielektrische Fokussierung den Nachteil hat, dass Elektroden in die Dosierkammer eingebracht werden müssen, was eine Veränderung des Dispensers selbst erfordert. Bei Ausführungsbeispielen der Erfindung hingegen muss der Dispenser selbst, d.h. die Fluidikstrukturen desselben, nicht verändert werden, wobei der zur Fokussierung verwendete Schallgeber nach Bedarf justiert oder abgeschaltet werden kann.

Ausführungsbeispiele der Erfindung basieren auf der erstmaligen Erkenntnis, dass eine akustische Fokussierung in einem Drop-on-Demand-Dispenser, d.h. eine Dispenser, der einen diskreten und nicht einen kontinuierlichen Fluss erzeugt, umsetzbar ist. Bei Ausführungsbeispielen der Erfindung weist die Fluidkammer die Form eines sich zu einer Düse verjüngenden Kanals auf. Es wurde erkannt, dass eine solche Form für eine Akustophorese geeignet ist, und dabei unerwartete Vorteile bietet. So wurde erkannt, dass unterschiedliche stehende Schallbilder erzeugt werden können, die neben einer Fokussierung der Partikel in der Mitte der Fluidkammer auch die Möglichkeit bieten, Partikel quer zur Strömungsrichtung zu halten. Die Erfinder haben erkannt, dass der ruhende stabile Meniskus, der an der Düse des Drop-on-Demand-Dispensers zwischen den Dispensiervorgängen auftritt, nicht derart von dem akustischen Feld beeinflusst wird, dass er instabil wird. Erst diese Erkenntnis machte die Kombination von Drop-on-Demand-Dispenser und Akustophorese und die dadurch erreichbaren Vorteile möglich.

Verglichen mit Techniken zum Drop-on-Demand-Dispensen von Partikeln, bei denen die Partikel in der Suspension willkürlich verteilt sind, reduzieren Ausführungsbeispiele der Erfindung den Aufwand, um Partikel zu detektieren deutlich. Dadurch kann die Rate und die Genauigkeit der Detektion erhöht werden. Die Vorhersagbarkeit, ob ein Tropfen Partikel enthält, und wenn ja, wie viele, kann somit erhöht werden. Somit ermöglichen Ausführungsbeispiele der Erfindung eine genauere Bestimmung der Partikelzahl und somit einen höheren Durchsatz.

Ausführungsbeispiele der Erfindung basieren somit auf der Erkenntnis, dass eine akustophoretische Ausrichtung bzw. Fokussierung von Partikeln in einem Dispenser, der einen Drop-on-Demand-Mechanismus benutzt, auf vorteilhafte Weise eingesetzt werden kann, um gezielt einzelne Partikel einer Düse zuzuführen oder gezielt Partikel zurückzuhalten. Im Gegensatz dazu nutzen die in der WO 2013/003498 A2 und der US 2012/0298564 A1 beschriebenen Techniken akustische Kräfte, um Partikel in einem kontinuierlichen Fluss besser analysieren zu können, wobei die dort beschriebenen Anordnungen jedoch Partikel nicht vereinzeln können.

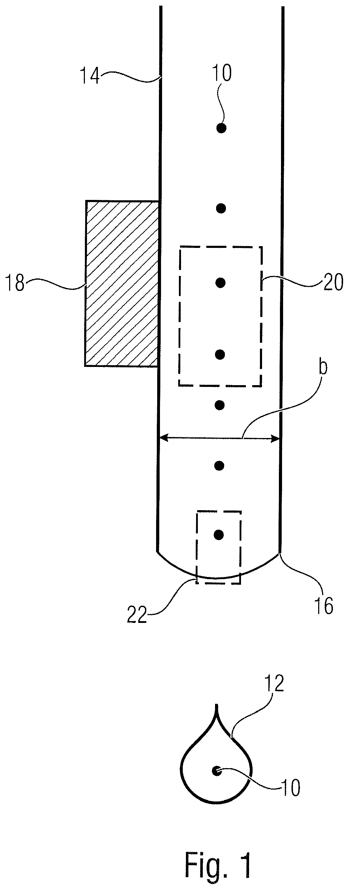

Fig. 1 zeigt eine schematische Darstellung eines Ausführungsbeispiels einer Vorrichtung zum Dispensieren von Partikeln 10 in frei fliegenden Flüssigkeitstropfen 12. Die Vorrichtung weist eine Fluidkammer 14 auf, die bei dem gezeigten Ausführungsbeispiel die Form eines Kanals hat. Ein oberes Ende der Fluidkammer 14 stellt einen Einlass dar, und ein unteres Ende der Fluidkammer 14 stellt eine Düse 16 dar, mit der die Fluidkammer 14 fluidisch gekoppelt ist. Die Vorrichtung weist einen Schallgeber 18 auf, der konfiguriert ist, um in der Fluidkammer 14 ein akustisches Feld zu erzeugen, durch das die Partikel 10 in einer Flüssigkeit in der Fluidkammer 14 in einer Anordnung ausgerichtet werden können. Die Vorrichtung weist ferner einen Drop-on-Demand-Mechanismus 20 auf, der konfiguriert ist, um gezielt einen einzelnen Flüssigkeitstropfen 12, der einen Partikel 10 enthält, zu einem gewählten Zeitpunkt aus der Düse 16 zu dispensieren. Der Drop-on-Demand-Mechanismus kann ein piezoelektrisch betriebener Mechanismus sein, der beispielsweise eine mechanische Membran aufweist, die an die Fluidkammer angrenzt und ein piezoelektrisches Betätigungselement, das konfiguriert ist, um die mechanische Membran zu betätigen, um ein Volumen der Fluidkammer zu reduzieren, um das frei fliegende Tröpfchen 12 aus der Düse 16 auszustoßen. Hinsichtlich eines Beispiels eines Drop-on-Demand-Mechanismus kann beispielsweise auf die Lehre der WO 2011/154042 A1 verwiesen werden, die hiermit durch Bezugnahme aufgenommen wird.

Der Schallgeber 18 kann beispielsweise durch einen Piezowandler gebildet sein, der konfiguriert ist, um ein akustisches Feld bei der geeigneten Frequenz zu erzeugen. Der Schallgeber steht in mechanischem Kontakt mit der Fluidkammer und dadurch auch mit der Flüssigkeit. Die Anregungsfrequenz des Schallgebers 18 kann bei einer Resonanzfrequenz der Fluidkammer 14 liegen, d.h. es gilt für die Wellenlänge $\lambda=2 \cdot b/n$, wobei b die Breite der Fluidkammer 14 und n der Mode der Schwingung ist. Dadurch kann beim Mode n=1 eine stehende Welle in der Fluidkammer 14 erzeugt werden, durch die die Partikel 10 mittig in der Fluidkammer entlang einer Linie ausgerichtet werden, wie in Fig. 1 gezeigt ist. Die Partikel fließen nicht kontinuierlich, sondern werden durch das on-Demand-Dispensieren Schritt für Schritt weiter in Richtung zu der Düse 16 hin transportiert. An einer geeigneten Stelle, beispielsweise in der Nähe der Düse 16, befindet sich die interessierende Region (ROI) bzw. das interessierende Volumen 22. Ein Sensor bzw. Detektor, in Fig. 1 nicht gezeigt, kann vorgesehen sein, um Informationen darüber zu erfassen, ob in dem entsprechenden Volumen 22 ein Partikel angeordnet ist. Das interessierende Volumen kann dabei ein Volumen sein, das mit einem der nächsten Tropfen aus der Düse dispensiert wird. Bei Ausführungsbeispielen kann das interessierende Volumen ein Volumen sein, das bei dem nächsten Dispensiervorgang aus der Düse ausgestoßen wird.

Bei Ausführungsbeispielen kann der Drop-on-Demand-Mechanismus somit konfiguriert sein, um die Partikel schrittweise Richtung Düse zu bewegen, wobei der Schallgeber konfiguriert ist, um das akustische Feld mit einer ersten Frequenz zu erzeugen, bei der die Partikel entlang zumindest einer Linie parallel zu der Bewegungsrichtung ausgerichtet werden. Ferner kann die Linie mittig in der Fluidkammer zu der Düse hin ausgerichtet sein. Quer zur Bewegungsrichtung gegenüberliegende Kammerwände der Fluidkammer, beispielsweise die linken und rechten Kammerwände in Fig. 1, können in einem Abstand voneinander angeordnet sein, der einem ganzzahligen Vielfachen der halben Wellenlänge der Frequenz des akustischen Felds entspricht. Bei Ausführungsbeispielen der Erfindung kann die Fluidkammer einen runden oder rechteckigen, z.B. quadratischen Flussquerschnitt in Strömungsrichtung aufweisen.

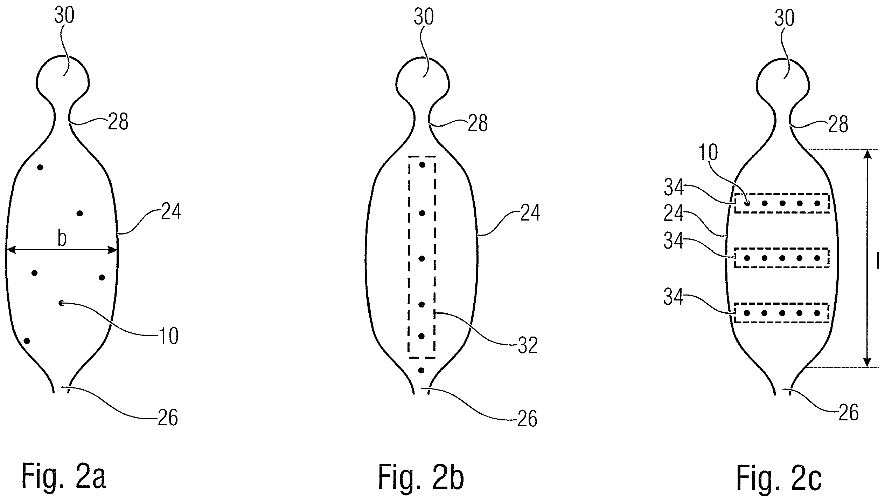

Eine schematische Darstellung einer Fluidkammer 24, die eine Düse 26 und einen Einlass 28 aufweist, ist in Fig. 2a gezeigt. Der Einlass 28 kann mit einem Einlassbereich 30 fluidisch gekoppelt sein. Bei Ausführungsbeispielen der Erfindung können Fluidikstrukturen, die die in Fig. 2a gezeigten Fluidikstrukturen darstellen, in einem Mikrochip gebildet sein, der beispielsweise aus Silizium und Glas besteht. Beispielsweise können die fluidischen Strukturen, die die Fluidkammer 24, die Düse 26, und den Einlass 28 umfassen, in einem Siliziumsubstrat gebildet und mit einer Glasplatte gedeckelt sein. Ein Schallgeber, in den Fig. 2a-2c nicht gezeigt, ist vorgesehen, durch den ein resonantes Schallfeld in der Fluidkammer 24 erzeugt werden kann. Wie in Fig. 2a gezeigt ist, ist die Fluidkammer 24 zu der Düse 26 hin verjüngt und endet in der Düse. Ferner ist die Dosierkammer zu dem Einlass hin verjüngt und endet mit einem fluidischen Widerstand vor dem Einlass 28. Schallwellen reflektieren dabei an der Grenzfläche zwischen der Flüssigkeit und dem Material, in dem die Fluidkammer gebildet ist, beispielsweise Silizium. Bei der Flüssigkeit kann es sich beispielsweise um Wasser oder eine Pufferlösung handeln, in der Partikel, bei denen es sich um Zellen handeln kann, suspendiert sind. Bei der Darstellung in Fig. 2a liegt kein akustisches Feld an und die Partikel 10 sind willkürlich in der Fluidkammer 24 angeordnet.

Bei Ausführungsbeispielen der Erfindung ist der Schallwandler konfiguriert, um ein akustisches Feld in der Fluidkammer 24 zu erzeugen, durch das die Partikel, die sich mit jedem Tropfenausstoß schrittweise Richtung Düse 26 bewegen, parallel zur Fluidbewegung angeordnet werden. Die Frequenz des Schallwandlers wird dabei so gewählt, dass der Abstand der Siliziumwände quer zur Bewegungsrichtung der Partikel ein Mehrfaches (ganzzahliges Vielfaches) von $\lambda/2$ beträgt, wobei $\lambda$ die Wellenlänge der Schallwelle in der Flüssigkeit ist. Die Wände der Fluidkammer stellen dabei Grenzflächen zwischen dem Material, in dem die Fluidkammer gebildet ist, und der Flüssigkeit dar, an denen ein akustischer Impedanzsprung stattfindet. Dadurch können eine oder mehrere Druckknotenlinien parallel zur Fluidbewegung erzeugt werden. Eine akustische Fokussierung kann hier also parallel zur Fluidbewegung stattfinden. Die Düse und die Fluidkammer können derart angeordnet sein, dass der Hauptschwingungsmodus und somit die Hauptdruckknotenlinie mittig in der Fluidkammer zentriert und zu der Düse hin gerichtet ist. Dadurch ist es möglich, die Partikel bei jedem Tropfenausstoß, d.h. jeder On-Demand-Betätigung, definiert in Richtung zu der Düse 26 hin zu bewegen. Die entsprechende Knotenlinie des Druckfeldes ist durch einen gestrichelten Rahmen 32 in Fig. 2b gezeigt.

Ein Anregungsfall, wie er oben Bezug nehmend auf Fig. 2b beschrieben wurde, ist insbesondere vorteilhaft, um Partikel gezielt der Düse 26 zuzuführen. Ferner ist ein solcher Anregungsfall vorteilhaft, wenn eine optische Partikelerkennung vorgenommen wird. Partikel können gezielt in einer interessierenden Region positioniert bzw. fokussiert werden.

Dabei kann eine Abschattung von Partikeln verhindert werden, welche üblicherweise bei nicht fokussierten Partikeln in der Fluidkammer bzw. im Kanal auftreten kann, wenn die Partikel sich am Rande der Fluidkammer bzw. des Kanals befinden. Ferner besteht die Möglichkeit, die optische Sensorregion, die der interessierenden Region entspricht, kleiner zu gestalten, was darüber hinaus einen höheren Durchsatz ermöglicht.

Ein zweiter Anregungsfall wird nun Bezug nehmend auf Fig. 2c beschrieben. Bei dem in Fig. 2c gezeigten Fall ist die Frequenz des Schallgebers eingestellt, um ein resonantes Schallfeld zu erzeugen, das 90 Grad gedreht ist im Vergleich zu den vorherig beschriebenen Schallfeldern. Die stehende Welle ist hier parallel zur Fluidbewegungsrichtung oder anders ausgedrückt sind die Knotenlinien quer (d.h. senkrecht) zur Fluidbewegungsrichtung. Dies ist aufgrund der Geometrie der Fluidkammer möglich, die sowohl zu der Düse hin als auch zu dem Einlass hin verjüngend ausgebildet ist. Mit anderen Worten ist die Fluidkammer an zwei sich in Strömungsrichtung gegenüberliegenden Enden sich verjüngend ausgebildet, so dass durch Reflektionen an den dadurch gebildeten Wänden stehende Schallwellen erzeugt werden können. Durch eine verglichen mit der Kammerbreite b geringe Abmessung der Öffnungen des Einlasses 28 und der Düse 26 ist es möglich, dass die Öffnungen kaum störende Einflüsse auf das Schallfeld haben. Somit kann ein resonantes Schallfeld erzeugt werden, das ein oder mehrere Knotenlinien quer zur Fluidbewegungsrichtung aufweist. Beispielsweise sind in Fig. 2c drei derartige Knotenlinien 34 gezeigt. Partikel können an diesen Knotenlinien gehalten werden. Die Frequenz ist dabei derart zu wählen, dass der Abstand sich in Fluidbewegungsrichtung gegenüberliegender Wände der Fluidkammer, d.h. die Länge I, die in Fig. 2c eingezeichnet ist, einem ganzzahligen Vielfachen der halben Wellenlänge der Schallwelle in der Flüssigkeit entspricht. Bei Ausführungsbeispielen kann die Abmessung der Öffnungen der Düse 26 und des Einlasses 28 höchstens 50%, besser jedoch weniger als 25% der Breite der Fluidkammer quer zur Fluidbewegungsrichtung betragen. Bei Ausführungsbeispielen kann die Breite der Öffnungen zwischen 10 und 125 $\mu$m betragen und die gesamte Kammerbreite kann zwischen 750 $\mu$m und 1250 $\mu$m betragen. Bei Ausführungsbeispielen kann die Breite der Öffnungen 1 % bis 15%, beispielsweise 10%, der Kammerbreite betragen.

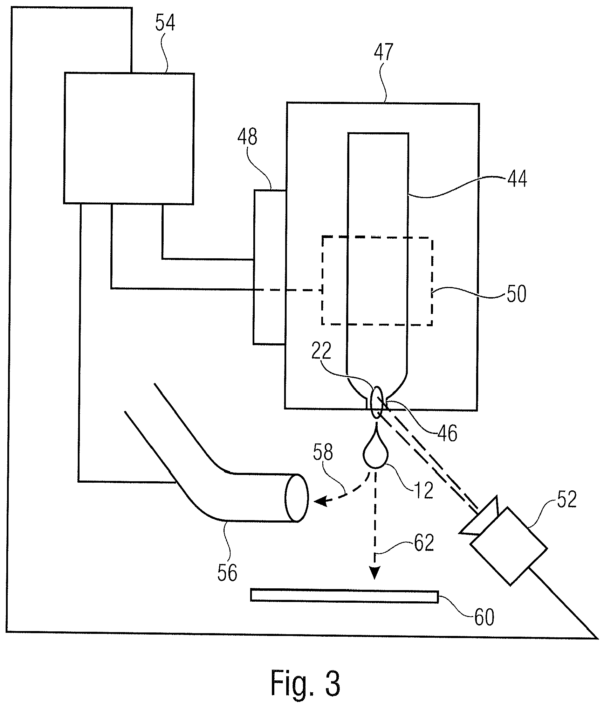

Durch eine entsprechende Anregung, wie sie Bezug nehmend auf Fig. 3c erläutert wurde, ist es somit möglich, Partikel trotz einer Fluidbewegung festzuhalten. Dadurch kann Flüssigkeit, beispielsweise Pufferlösung, dispensiert werden, ohne Partikel aus der Düse 26 zu dispensieren, da die Partikel an den Knotenlinien, d.h. den Druckminima, gehalten werden. Somit kann eine Düseneintrocknung verhindert werden, indem gelegentlich, beispielsweise periodisch, Flüssigkeit dispensiert wird, ohne Partikel zu dispensieren. Ausführungsbeispiele ermöglichen es somit, Partikel gegen eine Sedimentation zu halten, die zu einer Düsenverstopfung führen könnte. Ferner ist es möglich, nach Bedarf zwischen einem Dispensieren mit oder ohne Partikel umzuschalten, ohne dass Partikel verloren gehen müssen, indem der Schallgeber entsprechend gesteuert wird. Es ist somit möglich, das abgegebene Volumen und die abgegebene Partikelzahl unabhängig voneinander zu wählen.

Ausführungsbeispiele der Erfindung schaffen somit Vorrichtungen und Verfahren, bei denen der Drop-on-Demand-Mechanismus konfiguriert ist, um die Partikel schrittweise Richtung Düse zu bewegen, wobei der Schallgeber konfiguriert ist, um das akustische Feld mit einer Frequenz zu erzeugen, bei der die Partikel entlang zumindest einer Linie senkrecht zu der Bewegungsrichtung ausgerichtet werden. Bei solchen Ausführungsbeispielen kann die Fluidkammer sich in der Bewegungsrichtung gegenüberliegende Kammerwände aufweisen, in der die Düse und eine Einlassöffnung gebildet sind, wobei die sich in der Bewegungsrichtung gegenüberliegenden Kammerwände einen Abstand voneinander aufweisen, der einem ganzzahligen Vielfachen der halben Wellenlänge der zweiten Frequenz entspricht. Falls, wie in den Fig. 2a-2c gezeigt ist, die Fluidkammer in dieser Richtung geneigte Kammerwände aufweist, kann, um den entsprechenden Abstand zu bestimmen, eine virtuelle Wandposition verwendet werden, die sich beispielsweise aus einem rechnerischen Mittelwert aufgrund des geneigten Verlaufes der Kammerwand ergibt.

Fig. 3 zeigt ein Ausführungsbeispiel einer Vorrichtung zum Dispensieren von Partikeln in frei fliegenden Flüssigkeitströpfchen unter Verwendung einer akustophoretischen Fokussierung und eines Drop-on-Demand-Mechanismus. Die Vorrichtung weist eine Fluidkammer 44 auf, die beispielsweise durch die in den Fig. 1 und 2a-2c beschriebene Fluidkammer 24 gebildet sein kann. Die Fluidkammer 44 ist mit einer Düse 46 fluidisch gekoppelt und kann in einem Dispensierchip 47 gebildet sein. Ein Schallgeber 48 kann direkt an dem Dispensierchip 47 angebracht sein. Alternativ kann der Schallgeber 48 an einem Halter (nicht gezeigt), an dem der Dispensierchip angebracht ist, angebracht sein. Der Halter kann beispielsweise aus Kunststoff gebildet sein. Ein Drop-on-Demand-Mechanismus 50, der dem Bezug nehmend auf Fig. 1 beschriebenen On-Demand-Mechanismus 20 entsprechen kann, ist vorgesehen, um gezielt einen einzigen Flüssigkeitstropfen, der einen Partikel enthalten kann, zu einem gewählten Zeitpunkt aus der Düse 46 zu dispensieren. Der Schallgeber 48 kann konfiguriert sein, um Anordnungen der Partikel in der Flüssigkeit in der Fluidkammer 46 zu bewirken, wie sie oben beispielsweise auf die Fig. 2a-2c beschrieben wurden. Ein Sensor 52 ist vorgesehen, der konfiguriert ist, Informationen darüber zu erfassen, ob in einem interessierenden Bereich 22, beispielsweise einem Volumen, das mit einem der nächsten Tropfen aus der Düse dispensiert wird, ein Partikel angeordnet ist. Der interessierende Bereich bzw. das interessierende Volumen können dabei in einem Bereich der Düse angeordnet sein. Beispielsweise kann das interessierende Volumen das Endvolumen der Düse sein, dessen Inhalt mit dem nächsten Tropfen beim nächsten On-Demand-Dispensier-Vorgang aus der Düse ausgestoßen wird.

Bei der Information, die durch den Sensor 52 erfasst wird, kann es sich beispielsweise um Informationen bezüglich der Anzahl, der Größe, der Position, des Typs, der Farbe und jeglicher anderer Eigenschaft der Partikel/Zellen innerhalb des Beobachtungsvolumens des Tröpfchengenerators handeln. Beispielsweise kann es sich bei dem Sensor 52 um eine Kamera handeln, die Bilder des Beobachtungsvolumens mit darin enthaltenen Partikeln/Zellen liefert, so dass Eigenschaften der Partikel/Zellen, die sich in dem Beobachtungsvolumen befinden, unter Verwendung bekannter Bildverarbeitungstechniken abgeleitet werden können, beispielsweise durch Vergleich mit bekannten Mustern und dergleichen. Dies kann beispielsweise durch eine Steuerung 54 geschehen, die mit dem Sensor 52, dem Schallgeber 48 und dem Drop-on-Demand-Mechanismus 50 gekoppelt ist, um den Betrieb derselben zu steuern. Ferner kann die Steuerung 54 mit einer Absaugeinrichtung 56 gekoppelt sein, um diese abhängig von den erfassten Informationen zu steuern. Falls beispielsweise erfasst wird, dass sich in dem Beobachtungsvolumen 22 kein Partikel oder kein Partikel einer gewünschten Art befindet, kann die Absaugeinrichtung 56 durch die Steuerung 54 betätigt werden, um einen entsprechenden Tropfen abzusaugen, wie durch einen Pfeil 58 in Fig. 3 dargestellt ist. Falls sich in dem Beobachtungsvolumen 22 jedoch ein Partikel oder ein Partikel der gewünschten Art befindet, wird die Absaugeinrichtung 56 nicht aktiviert, so dass der entsprechende Tropfen auf einen Träger 60 ausgestoßen wird, wie durch einen Pfeil 62 in Fig. 3 angedeutet ist. Bei dem Träger 60 kann es sich beispielsweise um eine Mikrotiterplatte oder eine andere Einrichtung handeln, die eine Weiterverarbeitung des dispensierten Tropfens mit dem darin enthaltenen Partikel ermöglicht. Ausführungsbeispiele sind somit ausgelegt, um einen dispensierten Tropfen abhängig von der erfassten Information zu einer ersten Position (Träger 60) oder einer zweiten Position (Absaugeinrichtung 56) zu dispensieren. Es bedarf keiner weiteren Erläuterung, dass alternative Möglichkeiten, um Tropfen zu unterschiedlichen Positionen zu dispensieren, vorgesehen sein können, beispielsweise solche, wie sie in der WO 2011/154042 A1 beschrieben sind.

Dadurch kann es z.B. möglich sein, nur Tropfen, die lediglich exakt einen Partikel bzw. eine Zelle enthalten, auf die Ablage 60 auszustoßen, während alle anderen Tropfen durch die Absaugeinrichtung 56 abgesaugt werden. Die Absaugeinrichtung 56 kann beispielsweise mit einem Abfallbehälter verbunden sein.

Die Steuerung 54 kann ferner ausgelegt sein, um den Schallgeber 48 zu steuern, um akustische Felder mit unterschiedlicher Frequenz in der Fluidkammer 44 zu erzeugen, beispielsweise um Knotenlinien des Druckfeldes, wie sie oben Bezug nehmend auf die Fig. 2b und 2c beschrieben wurden, zu erzeugen.

Ausführungsbeispiele der vorliegenden Erfindung schaffen somit ein System, das für das Dispensieren, Zählen und Charakterisieren von Partikeln, beispielsweise biologischen Zellen, in Flüssigkeit verwendet werden kann. Die Zellkonzentration in der Flüssigkeit kann dabei so eingestellt werden, dass die Zellen einzeln in die Fluidkammer (Dosierkammer) fließen, beispielsweise über eine Einlasskammer und einen Einlass. Ohne eine Fokussierung würden sich die einzeln zugeführten Partikel willkürlich in der Kammer verteilen. Durch eine akustophoretische Fokussierung können die Partikel jedoch entlang einer Linie, die auf die Ausstoßdüse hin gerichtet ist, ausgerichtet werden. Jeweils ein Partikel kann dann unter Verwendung eines Tropfengenerators, bei dem es sich beispielsweise um einen Drop-on-Demand-Direktvolumenverdränger handeln kann, dispensiert werden, wobei bei jeder Dispensierung ein bestimmtes Flüssigkeitsvolumen inklusive der darin enthaltenen Zelle(n) aus der Düse abgegeben wird. Dadurch können weitere Partikel aus einem Reservoir nachrücken. Durch den Schallgeber kann ein Schallfeld in die Fluidkammer, d.h. die Dosierkammer, des Dispensers eingekoppelt werden. Die Frequenz kann so gewählt werden, dass sich aufgrund von Resonanz ein gewünschtes Partikelmuster ergibt. Beispielsweise können alle Partikel in der Mitte der Fluidkammer fokussiert werden, wobei die Düse ebenfalls mittig in der die Fluidkammer am strömungsmäßig vorderen Ende begrenzenden Wand gebildet sein kann. Eine bildgebende Optik kann verwendet werden, um die Position und Anzahl der Partikel in dem Sichtfeld der Kamera, der interessierenden Region, zu erkennen, so dass ein Bildverarbeitungsalgorithmus, der beispielsweise in der Steuerung 54 durchgeführt wird, dadurch die Partikelanzahl im nächsten Tropfen vorhersagen kann.

Somit eignen sich Ausführungsbeispiele der Erfindung zum Drucken einzelner Zellen oder einer bestimmten Anzahl von Zellen. Andere Beispiele können sich auf das Drucken einzelner Bakterien oder anderer Organismen oder Gruppen davon beziehen. Wiederum andere Beispiele können sich auf das Drucken einzelner Öltropfen in Suspension oder Gruppen einer bestimmten Anzahl von Öltropfen beziehen. Darüber hinaus können Ausführungsbeispiele der Erfindung auch das Drucken einzelner künstlicher Partikel oder von Gruppen künstlicher Partikeln in Suspensionen, beispielsweise Beads, Quantum Dots und dergleichen, beziehen. Weitere Ausführungsbeispiele können sich auf eine Vorselektion von Partikeln mit akustischem Kontrast beziehen, um nur bestimmte Partikel zu dispensieren.

Hinsichtlich der der Akustophorese zugrunde liegenden Technologie kann beispielsweise auf die oben genannte Schrift von I. Leibacher verwiesen werden. Wie oben ausgeführt wurde, werden, um Partikel in einer Flüssigkeit in einer Anordnung auszurichten, stehende Schallwellen in der Flüssigkeit erzeugt, so dass sich Partikel an Knoten des Druckfelds sammeln. Eine stehende Welle wird durch Überlagerung einer fortschreitenden Welle und einer reflektierten Welle erzeugt. Die Reflexion wird über einen Impedanzsprung am Übergang von zwei Materialien erreicht. Die akustische Impedanz Z eines Materials ergibt sich durch dessen Materialdichte p und dessen Schallgeschwindigkeit c:

$$Z = \rho \cdot c.$$

Beispielsweise haben Wasser und Silizium, die als Materialien in Betracht kommen, folgende Eigenschaften:

| Material | Schallgeschwindigkeit c | Dichte $\rho$ | Charakteristische akustische Impedanz Z |
|---|---|---|---|
| Wasser | 1497 m/s | 998 kg/m$^3$ | 1.5 e6 Ns/m$^3$ |
| Silizium [110] | 9133 m/s | 2331 kg/m$^3$ | 21.3 e6 Ns/m$^3$ |

Der Reflexionskoeffizient R und der Transmissionskoeffizient T ergeben den Anteil der Wellenintensität, der an einem Impedanzsprung reflektiert oder transmittiert wird:

$$R_I = \left( \frac{Z_2 - Z_1}{Z_2 + Z_1} \right)^2, \ T_I = \frac{4 Z_1 Z_2}{\left( Z_1 + Z_2 \right)^2}$$

mit $R_I + T_I$ = 100%

Für die Grenzfläche Wasser/Silizium gilt:

$$\text{Wasser/Silizium} \rightarrow R_I = 75\%, \ T_I = 25\%$$

Es wird also 75% der Wellenintensität reflektiert an einer Siliziumwand, die einen Wasserkanal begrenzt, so dass eine Resonanz entstehen kann.

Selbstverständlich sind die obigen Materialien rein beispielhaft und Ausführungsbeispiele der Erfindung können unter Verwendung anderer Materialien mit unterschiedlichen akustischen Impedanzen implementiert werden, solange die Erzeugung eines entsprechenden akustischen Felds möglich ist.

Ausführungsbeispiele der Erfindung schaffen somit Vorrichtungen und Verfahren zum Dispensieren (Drucken, Dosieren) von Partikeln und Zellen, die einen Drop-on-Demand-Mechanismus zum Dispensieren einzelner Tropfen, einen Schallgeber, der in der Dispensiereinheit ein akustisches Feld erzeugt, so dass die Partikel oder Zellen geordnet dem Erkennungsbereich zugeführt werden, und einen Sensormechanismus zum Erkennen einzelner oder mehrerer Partikel oder Zellen vor dem Dispensieren aufweisen.

Bei Ausführungsbeispielen kann in Abhängigkeit von der Kanalgeometrie des Dispensers bedarfsspezifisch zwischen verschiedenen Partikelanordnungen unabhängig von der Fluidbewegung umgeschaltet werden. Der Schallgeber kann bei ausreichender eingekoppelter Energie an frei wählbarer Position angebracht werden. Eine Steuereinheit kann die Anregungsfrequenz ansprechend dem Anwendungsfall auswählen. Beispielsweise kann die Anregungsfrequenz einer Resonanzfrequenz eines Feldes quer zur Strömungsrichtung entsprechen, oder kann einer Resonanzfrequenz eines Feldes parallel zur Strömungsrichtung entsprechen. Alternativ kann eine Anregungsfrequenz eine beliebige Kombination derartiger Frequenzen sein.

Ausführungsbeispiele der vorliegenden Erfindung schaffen somit eine Möglichkeit, Partikel bzw. Zellen in einer Flüssigkeit in einem Dispenser, insbesondere in einem Drop-on-Demand-Dispenser aufzureihen. Bei Ausführungsbeispielen der Erfindung wird dies durch eine akustophoretische Fokussierung erreicht. Durch diese wird eine Kraft auf die Partikel in der Flüssigkeit bewirkt, so dass die Partikel relativ zur Flüssigkeit bewegt werden können, um die entsprechende Anordnung zu erreichen. Somit ist es bei Ausführungsbeispielen möglich, Partikel in einer Fluidkammer zurückzuhalten, während Flüssigkeitstropfen ohne Partikel ausgestoßen werden.

Typische Abmessungen von Fluidikstrukturen, beispielsweise der Fluidkammer und der Düse, können in einem Bereich von 1 $\mu$m bis 1000 $\mu$m liegen. Typische Flüssigkeitsvolumen, beispielsweise der ausgestoßenen Tröpfchen, können in einem Bereich von einem Picoliter bis einem Mikroliter liegen. Als Partikelsensor können, wie beschrieben, bildgebende Sensoren verwendet werden. Alternativ können Fluoreszenz-messende Sensoren oder andere optische Sensoren (z.B. Ramanspektroskopie), elektrische Sensoren oder mechanische Sensoren verwendet werden. Allgemein kann jeglicher Sensor verwendet werden, der es ermöglicht, Informationen über in einem interessierenden Bereich vorliegende Partikel zu erfassen.

Ausführungsbeispiele der Erfindung ermöglichen durch die akustische Anordnung der Partikel eine erhöhte Genauigkeit bei der Partikeldetektion, da Sensorsignale von der Partikeldetektion einheitlicher werden. Bei einer bildgebenden Detektion kann ein kleines Bildfeld bzw. eine stärkere Vergrößerung gewählt werden. Zusätzlich kann bei immer gleicher Partikelposition die Variabilität des Hintergrunds reduziert werden. Falls die Anordnung der Partikel so gewählt wurde, dass die Partikel sich nicht am Rand des Flüssigkeitskanals bzw. des Fluidkanals befinden, werden weiterhin Detektionsfehler durch Randeffekte, wie z.B. Abschattung, verhindert. Dies kann den Partikelverlust, d.h. die Anzahl nicht-detektierter Partikel, deutlich verringern. Des Weiteren kann bei vielen Sensorsystemen die Detektion bzw. Abtastrate erhöht werden. Dies ergibt sich daraus, dass das Messfeld bzw. das Messvolumen (interessierende Region) erheblich reduziert wird. Ferner ist die Bewegung der Partikel im Fluid besser vorhersagbar, wenn ihre Position einheitlich ist. Dies hat insbesondere den Vorteil, dass die Zahl der Partikel im nächsten Tropfen mit höherer Sicherheit vorhergesagt werden kann. Durch die kleinere ROI ist es möglich, bei gleichbleibender Partikelgröße das Signal/Rauschverhältniszu verbessern.

Gemäß einem ersten Aspekt weist eine Vorrichtung zum Dispensieren von Partikeln in frei fliegenden Flüssigkeitstropfen, folgende Merkmale auf: eine Fluidkammer, die mit einer Düse fluidisch gekoppelt ist; einen Schallgeber, der konfiguriert ist, um in der Fluidkammer ein akustisches Feld zu erzeugen, durch das Partikel in einer Flüssigkeit in der Fluidkammer in einer Anordnung ausgerichtet werden können; und einen Drop-on-Demand-Mechanismus, der konfiguriert ist, um gezielt einen einzelnen Flüssigkeitstropfen, der einen oder mehrere Partikel enthält, zu einem gewählten Zeitpunkt aus der Düse zu dispensieren.

Gemäß einem zweiten Aspekt weist bei der Vorrichtung nach dem ersten Aspekt der Schallgeber eine einstellbare Frequenz aufweist.

Gemäß einem dritten Aspekt ist bei der Vorrichtung nach dem ersten oder zweiten Aspekt der Drop-on-Demand-Mechanismus konfiguriert, um die Partikel schrittweise Richtung Düse zu bewegen, wobei der Schallgeber konfiguriert ist, um das akustische Feld mit einer ersten Frequenz zu erzeugen, bei der die Partikel entlang zumindest einer Linie parallel zu der Bewegungsrichtung ausgerichtet werden.

Gemäß einem vierten Aspekt weisen bei der Vorrichtung nach dem dritten Aspekt sich quer zu der Bewegungsrichtung gegenüberliegende Kammerwände der Fluidkammer einen Abstand voneinander auf, der einem ganzzahligen Vielfachen der halben Wellenlänge der ersten Frequenz entspricht.

Gemäß einem fünften Aspekt ist bei der Vorrichtung nach einem des dritten oder vierten Aspekts die Linie mittig in der Fluidkammer zu der Düse hin ausgerichtet.

Gemäß einem sechsten Aspekt ist bei der Vorrichtung nach einem des ersten bis fünften Aspekts der Drop-on-Demand-Mechanismus konfiguriert, um die Partikel schrittweise Richtung Düse zu bewegen, wobei der Schallgeber konfiguriert ist, um das akustische Feld mit einer zweiten Frequenz zu erzeugen, bei der die Partikel entlang zumindest einer Linie senkrecht zu der Bewegungsrichtung ausgerichtet werden.

Gemäß einem siebten Aspekt weist bei der Vorrichtung nach dem sechsten Aspekt die Fluidkammer sich in der Bewegungsrichtung gegenüberliegende Kammerwände auf, in der die Düse und eine Einlassöffnung gebildet sind, wobei die sich in der Bewegungsrichtung gegenüberliegenden Kammerwände einen Abstand voneinander aufweisen, der einem ganzzahligen Vielfachen der halben Wellenlänge der zweiten Frequenz entspricht.

Gemäß einem achten Aspekt weist die Vorrichtung nach dem siebten Aspekt ferner eine Steuerung auf, die konfiguriert ist, um den Schallgeber zu steuern, um das akustische Feld mit entweder der ersten Frequenz oder der zweiten Frequenz zu erzeugen.

Gemäß einem neunten Aspekt weist die Vorrichtung nach einem des ersten bis achten Aspekts ferner einen Sensor auf, der konfiguriert ist, um Information darüber zu erfassen, ob in einem interessierenden Volumen, das mit einem der nächsten Tropfen aus der Düse dispensiert wird, ein Partikel angeordnet ist, wobei der Schallgeber konfiguriert ist, um ein akustisches Feld zu erzeugen, durch das einer der Partikel in dem interessierenden Volumen angeordnet wird.

Gemäß einem zehnten Aspekt ist die Vorrichtung nach dem neunten Aspekt ausgelegt, um einen dispensierten Tropfen abhängig von der erfassten Information zu einer ersten Position oder einer zweiten Position zu dispensieren.

Gemäß einem elften Aspekt weist ein Verfahren zum Dispensieren von Partikeln in frei fliegenden Flüssigkeitstropfen folgende Merkmale auf: Erzeugen eines akustischen Felds in einer Fluidkammer, die mit einer Düse fluidisch gekoppelt ist, um Partikel in einer Flüssigkeit in der Fluidkammer in einer Anordnung auszurichten; und Betätigen eines Drop-on-Demand-Mechanismus, der konfiguriert ist, um gezielt einen einzelnen Tropfen zu einem gewählten Zeitpunkt aus der Düse zu dispensieren, um einen frei fliegenden Flüssigkeitstropfen, der einen oder mehrere Partikel enthält, aus der Düse auszustoßen.

Gemäß einem zwölften Aspekt werden bei einem Verfahren nach dem elften Aspekt durch das Betätigen des Drop-on-Demand-Mechanismus die Partikel schrittweise Richtung Düse bewegt, wobei das akustische Feld mit einer ersten Frequenz erzeugt wird, bei der die Partikel entlang zumindest einer Linie parallel zu der Bewegungsrichtung ausgerichtet werden.

Gemäß einem dreizehnten Aspekt werden bei einem Verfahren nach dem elften oder zwölften Aspekt durch das Betätigen des Drop-on-Demand-Mechanismus die Partikel schrittweise Richtung Düse bewegt, wobei das akustische Feld mit einer zweiten Frequenz erzeugt wird, bei der die Partikel entlang zumindest einer Linie senkrecht zu der Bewegungsrichtung ausgerichtet werden.

Gemäß einem vierzehnten Aspekt werden bei einem Verfahren nach dem dreizehnten Aspekt die Partikel entlang der Linie senkrecht zu der Bewegungsrichtung ausgerichtet und gehalten, während durch Betätigen des Drop-on Demand-Mechanismus ein Tropfen, der keinen Partikel enthält, aus der Düse ausgestoßen wird.

Gemäß einem fünfzehnten Aspekt weist ein Verfahren nach einem des elften bis vierzehnten Aspekts ferner ein Erfassen von Information, ob in einem interessierenden Volumen, das mit einem der nächsten Tropfen aus der Düse dispensiert wird, ein Partikel angeordnet ist, auf, wobei durch das akustische Feld einer der Partikel in dem interessierenden Volumen angeordnet wird, und das ein Dispensieren eines Tropfens zu einer ersten Position oder einer zweiten Position abhängig von der erfassten Information aufweist.

Funktionale Merkmale, die hierin Bezug nehmend auf eine Vorrichtung beschrieben wurden, stellen, wie für Fachleute offensichtlich ist, jeweils auch Merkmale eines entsprechenden Verfahrens dar, das konfiguriert ist, um eine entsprechende Funktionalität zu liefern, während Merkmale, die hierin Bezug nehmend auf ein Verfahren beschrieben wurden, jeweils auch Merkmale einer entsprechenden Vorrichtung darstellen, die konfiguriert ist, um entsprechende Merkmale auszuführen.

**Patentansprüche**

1.  Vorrichtung zum Dispensieren von Partikeln (10) in frei fliegenden Flüssigkeitstropfen, mit folgenden Merkmalen:

    einer Fluidkammer (14, 24, 44), die mit einer Düse (16, 26, 46) fluidisch gekoppelt ist;
    einem Schallgeber (18, 48), der konfiguriert ist, um in der Fluidkammer (14, 24, 44) ein akustisches Feld zu erzeugen, durch das Partikel (10) in einer Flüssigkeit in der Fluidkammer (14, 24, 44) in einer Anordnung ausgerichtet werden können; und
    einem Drop-on-Demand-Mechanismus (20, 50), der konfiguriert ist, um gezielt einen einzelnen Flüssigkeitstropfen (12), der einen oder mehrere Partikel (10) enthält, zu einem gewählten Zeitpunkt aus der Düse (16, 26, 46) zu dispensieren,
    wobei der Schallgeber (18, 48) konfiguriert ist, um in einem ersten Modus ein akustisches Feld zu erzeugen, bei dem zumindest ein Partikel (10) mit jedem Tropfenausstoß schrittweise Richtung Düse (16, 26, 46) bewegt wird, und in einem zweiten Modus ein akustisches Feld zu erzeugen, bei dem zumindest ein Partikel in der Fluidkammer (14, 24, 44) festgehalten wird.

2.  Vorrichtung nach Anspruch 1, bei der der Schallgeber (18, 48) eine einstellbare Frequenz aufweist.

3.  Vorrichtung nach Anspruch 1 oder 2, bei der der Drop-on-Demand-Mechanismus (20, 50) konfiguriert ist, um die Partikel (10) in dem ersten Modus schrittweise Richtung Düse (16, 26, 46) zu bewegen, wobei der Schallgeber (18, 48) konfiguriert ist, um in dem ersten Modus das akustische Feld mit einer ersten Frequenz zu erzeugen, bei der die Partikel (10) entlang zumindest einer Linie (32) parallel zu der Bewegungsrichtung ausgerichtet werden.

4.  Vorrichtung nach Anspruch 3, bei der sich quer zu der Bewegungsrichtung gegenüberliegende Kammerwände der Fluidkammer (14, 24, 44) einen Abstand voneinander aufweisen, der einem ganzzahligen Vielfachen der halben Wellenlänge der ersten Frequenz entspricht.

5.  Vorrichtung nach Anspruch 3 oder 4, bei der die Linie (32) mittig in der Fluidkammer (14, 24, 44) zu der Düse (16, 26, 46) hin ausgerichtet ist.

6.  Vorrichtung nach einem der Ansprüche 1 bis 5, bei der der Schallgeber (18, 48) in dem zweiten Modus konfiguriert ist, um das akustische Feld mit einer zweiten Frequenz zu erzeugen, bei der die Partikel (10) entlang zumindest einer Linie (34) senkrecht zu der Bewegungsrichtung ausgerichtet werden.

7.  Vorrichtung nach Anspruch 6, bei der die Fluidkammer (14, 24, 44) sich in der Bewegungsrichtung gegenüberliegende Kammerwände aufweist, in der die Düse (16, 26, 46) und eine Einlassöffnung (28) gebildet sind, wobei die sich in der Bewegungsrichtung gegenüberliegenden Kammerwände einen Abstand voneinander aufweisen, der einem ganzzahligen Vielfachen der halben Wellenlänge der zweiten Frequenz entspricht.

8.  Vorrichtung nach Anspruch 7, die ferner eine Steuerung aufweist, die konfiguriert ist, um den Schallgeber (18, 48) zu steuern, um das akustische Feld mit entweder der ersten Frequenz oder der zweiten Frequenz zu erzeugen.

9.  Vorrichtung nach einem der Ansprüche 1 bis 8, die ferner einen Sensor (52) aufweist, der konfiguriert ist, um Information darüber zu erfassen, ob in einem interessierenden Volumen (22), das mit einem der nächsten Tropfen (12) aus der Düse (16, 26, 46) dispensiert wird, ein Partikel (10) angeordnet ist, wobei der Schallgeber konfiguriert ist, um ein akustisches Feld zu erzeugen, durch das einer der Partikel (10) in dem interessierenden Volumen (22) angeordnet wird.

10. Vorrichtung nach Anspruch 9, die ausgelegt ist, um einen dispensierten Tropfen (12) abhängig von der erfassten Information zu einer ersten Position oder einer zweiten Position zu dispensieren.

**11.** Verfahren zum Dispensieren von Partikeln (10) in frei fliegenden Flüssigkeitstropfen (12), mit folgenden Merkmalen:

Erzeugen eines akustischen Felds in einer Fluidkammer (14, 24, 44), die mit einer Düse (16, 26, 46) fluidisch gekoppelt ist, um Partikel (10) in einer Flüssigkeit in der Fluidkammer (14, 24, 44) in einer Anordnung auszurichten; und

Betätigen eines Drop-on-Demand-Mechanismus (20, 50), der konfiguriert ist, um gezielt einen einzelnen Tropfen (12) zu einem gewählten Zeitpunkt aus der Düse (16, 26, 46) zu dispensieren, um einen frei fliegenden Flüssigkeitstropfen (12), der einen oder mehrere Partikel (10) enthält, aus der Düse (16, 26, 46) auszustoßen, wobei in einem ersten Modus ein akustisches Feld erzeugt wird, bei dem zumindest ein Partikel (10) mit jedem Tropfenausstoß schrittweise Richtung Düse (16, 26, 46) bewegt wird, und in einem zweiten Modus ein akustisches Feld erzeugt wird, bei dem zumindest ein Partikel in der Fluidkammer (14, 24, 44) festgehalten wird.

**12.** Verfahren nach Anspruch 11, bei dem durch das Betätigen des Drop-on-Demand-Mechanismus (20, 50) die Partikel (10) schrittweise Richtung Düse (16, 26, 46) bewegt werden, wobei in dem ersten Modus das akustische Feld mit einer ersten Frequenz erzeugt wird, bei der die Partikel (10) entlang zumindest einer Linie (32) parallel zu der Bewegungsrichtung ausgerichtet werden.

**13.** Verfahren nach Anspruch 11 oder 12, bei dem in dem zweiten Modus das akustische Feld mit einer zweiten Frequenz erzeugt wird, bei der die Partikel (10) entlang zumindest einer Linie (34) senkrecht zu der Bewegungsrichtung ausgerichtet werden.

**14.** Verfahren nach Anspruch 13, bei dem die Partikel (10) entlang der Linie (34) senkrecht zu der Bewegungsrichtung ausgerichtet und gehalten werden, während durch Betätigen des Drop-on Demand-Mechanismus ein Tropfen (12), der keinen Partikel (10) enthält, aus der Düse (16, 26, 46) ausgestoßen wird.

**15.** Verfahren nach einem der Ansprüche 11 bis 14, das ferner ein Erfassen von Information, ob in einem interessierenden Volumen, das mit einem der nächsten Tropfen (12) aus der Düse (16, 26, 46) dispensiert wird, ein Partikel (10) angeordnet ist, aufweist, wobei durch das akustische Feld einer der Partikel (10) in dem interessierenden Volumen (22) angeordnet wird, und das ein Dispensieren eines Tropfens (12) zu einer ersten Position oder einer zweiten Position abhängig von der erfassten Information aufweist.

Fig. 1

Fig. 2a

Fig. 2b

Fig. 2c

Fig. 3

**Europäisches Patentamt**
**European Patent Office**
**Office européen des brevets**

# EUROPÄISCHER RECHERCHENBERICHT

Nummer der Anmeldung

EP 17 21 0880

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 2009/139332 A1 (GODDARD GREGORY RUSS [US] ET AL) 4. Juni 2009 (2009-06-04)<br>* Absatz [0023] - Absatz [0024] *<br>* Absatz [0034] - Absatz [0039] *<br>* Abbildungen 4, 5 *<br>----- | 1-8,<br>11-14<br>9,10,15 | INV.<br>G01N15/14<br><br>ADD.<br>G01N15/10 |
| Y,D | WO 2011/154042 A1 (UNIV ALBERT LUDWIGS FREIBURG [DE]; KOLTAY PETER [DE]; YUSOF AZMI [DE]) 15. Dezember 2011 (2011-12-15)<br>* Seite 8, Zeile 27 - Seite 9, Zeile 15 *<br>* Seite 14, Zeile 8 - Zeile 37 *<br>* Abbildungen 1, 8A, 8B *<br>----- | 9,10,15 | |

RECHERCHIERTE SACHGEBIETE (IPC)

G01N
B01L

Der vorliegende Recherchenbericht wurde für alle Patentansprüche erstellt

| Recherchenort | Abschlußdatum der Recherche | Prüfer |
|---|---|---|
| Den Haag | 2. Mai 2018 | Liefrink, Feike |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 21 0880

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2018

| Im Recherchenbericht angeführtes Patentdokument | Datum der Veröffentlichung | Mitglied(er) der Patentfamilie | | Datum der Veröffentlichung |
|---|---|---|---|---|
| US 2009139332 A1 | 04-06-2009 | US | 2009139332 A1 | 04-06-2009 |
| | | US | 2012298236 A1 | 29-11-2012 |
| WO 2011154042 A1 | 15-12-2011 | DK | 2577254 T3 | 01-06-2015 |
| | | EP | 2577254 A1 | 10-04-2013 |
| | | ES | 2539047 T3 | 25-06-2015 |
| | | US | 2013095469 A1 | 18-04-2013 |
| | | WO | 2011154042 A1 | 15-12-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3380584 A
- EP 0421406 A2
- WO 2013003498 A2
- US 20120298564 A1
- WO 2011154042 A1

**In der Beschreibung aufgeführte Nicht-Patentliteratur**

- **NAKAMURA et al.** Biocompatible inkjet printing technique for designed seeding of individual living cells. *Tissue Engineering,* 2005, vol. 11 (11-12), 1658-1666
- **BEI YUSOF et al.** Inkjet-like printing of single-cell. *Lab on a Chip,* 2011, vol. 11 (14), 2447-2454
- **YAMAGUCHI et al.** Cell patterning through inkjet printing one cell per droplet. *Biofabrication,* 2012, vol. 4 (4
- *Annalen der Physik und Chemie,* vol. CXXVII (4
- **BEI MANDRALIS et al.** Fractionation of suspension using synchronized ultrasonic and flow fields. *AIChE Journal,* 1993, vol. 39 (2), 197-206
- **T. LAURELL et al.** Chip integrated strategies for acoustic separation and manipulation of cells and particles. *Chemical Society Reviews,* 2007, vol. 36 (3), 492-506
- **LEIBACHER et al.** Impedance matched channel walls in acoustofluidic systems. *Lab on a chip,* 2014, vol. 14 (3), 463-470